Europäisches Patentamt

European Patent Office

Office européen des brevets

(11) Veröffentlichungsnummer : **0 371 395 B1**

## (12) EUROPÄISCHE PATENTSCHRIFT

(45) Veröffentlichungstag der Patentschrift :
**13.05.92 Patentblatt 92/20**

(21) Anmeldenummer : **89121632.7**

(22) Anmeldetag : **23.11.89**

(51) Int. Cl.$^5$ : **G03B 27/16,** G03B 27/68

(54) **Kopiervorrichtung zum Modifizieren (Verzerren) von Filmvorlagen.**

Die Akte enthält technische Angaben, die nach dem Eingang der Anmeldung eingereicht wurden und die nicht in dieserPatentschrift enthalten sind.

(30) Priorität : **01.12.88 DE 3840568**

(43) Veröffentlichungstag der Anmeldung :
**06.06.90 Patentblatt 90/23**

(45) Bekanntmachung des Hinweises auf die
Patenterteilung :
**13.05.92 Patentblatt 92/20**

(84) Benannte Vertragsstaaten :
**AT BE CH DE ES FR GB GR IT LI LU NL SE**

(56) Entgegenhaltungen :
**EP-A- 0 022 198**
**EP-A- 0 280 584**
**DE-A- 2 402 894**
**US-A- 4 190 347**
**US-A- 4 390 272**
**US-A- 4 420 249**

(73) Patentinhaber : **Wulff, Michael**
**Grambeker Weg 161**
**W-2410 Mölln (DE)**

(72) Erfinder : **Wulff, Michael**
**Grambeker Weg 161**
**W-2410 Mölln (DE)**

(74) Vertreter : **von Raffay, Vincenz, Dipl.-Ing. et al**
**Patentanwälte Raffay & Fleck Postfach 32 32**
**17**
**W-2000 Hamburg 13 (DE)**

**Beschreibung**

Die Erfindung betrifft eine Kopiervorrichtung nach dem Oberbegriff des Patentanspruches 1.

Derartige Kopiervorrichtungen dienen dem fotomechanischen Modifizieren von Filmvorlagen, die in Längsrichtung und/oder Querrichtung verzerrt, d.h. gestaucht oder gedehnt werden sollen. Die Filmvorlage wird hierzu auf dem zu belichtenden Film angebracht. Die Lichtquelle wird über Filmvorlage und Film gefahren, wobei die Relativbewegung normalerweise dadurch erzeugt wird, daß der zu belichtende Film in der gleichen Achse wie die Lichtquelle bewegt wird, die Filmvorlage aber unbewegt bleibt. Die Art der Modifikation hängt im wesentlichen von der Bewegungsrichtung (Dehnen oder Stauchen) und von der Größe der Bewegung ab. Die Qualität der Modifikation ist in großem Maße von der Ausbildung und Anordnung der Lichtquelle abhängig. Ideal wäre eine extrem weit entfernt liegende Punktlichtquelle und ein sehr schmaler Spalt in der Strichblende, um Unterstrahlungen und Strichstärkeänderungen beim Übertragen von der Filmvorlage auf den Film zu vermeiden.

Es sind grundsätzlich zwei unterschiedliche Kopiervorrichtungen bekannt. Diese arbeiten mit einer sog. "Linear-Lichtquelle", bei der es sich um eine Punktlichtquelle oder um eine Streulichtquelle handeln kann.

Bei einer bekannten Ausführungsform einer Kopiervorrichtung ist eine Punktlichtquelle in Verbindung mit einer Spaltblende vorgesehen, wobei der Abstand zwischen Punktlichtquelle und Blende durch die die Raumhöhe begrenzt ist und ca. 80 bis 150 cm beträgt. Um genügend Lichtenergie auf das Filmmaterial zu bringen, muß der Spalt verhältnismäßig breit (5 bis 10 mm)) ausgeführt werden. Hierdurch kommt es zu einem sog. "Schattenzieh-Effekt", d.h. zu Strichbreitenänderungen in der Bewegungsachse. Da die Lichtquelle im allgemeinen feststeht, kommt es beim Überfahren der Spaltblende über den Film zu Lichteinfallwinkeländerungen und somit zu Unterstrahlungen. Dieses hat Kantenunschärfen auf der modifizierten Abbildung zur Folge.

Eine andere bekannte Ausführungsform weist eine Streulichtquelle in Einheit mit einer Spalt- oder Schlitzblende und einem Hohlspiegel in einem geschlossenen Gehäuse auf. Diese Einheit wird insgesamt über die Filmvorlage und den Film bewegt. Diese Ausführungsform vermeidet eine Illumination der Dunkelkammer beim Belichtungsvorgang, es besteht keine Abhängigkeit vom Filmformat und der Lichteinfallwinkel ist immer gleich. Bei dieser Ausführungsform ist aber wiederum ein schlechter Wirkungsgrad vorhanden, da trotz des Einsatzes eines Spiegels nur ein Bruchteil des abgestrahlten Lichts durch die Blende gelangt. Durch den Streulichtcharakter kommt es trotz des Spiegels zu Unterstrahlungen in der Blendenachse und somit zu Kantenunschärfen. Es ist zwar möglich, einen verhältnismäßig schmalen Spalt oder Schlitz (1 bis 3 mm) einzusetzen, durch Beugungseffekte und minimale Distanzschwankungen von der Blende zum Film beim Überfahren kommt es aber dennoch zu einem unscharfen Abbild des "Lichtstriches", der zudem in der Breite stark von der Dicke des zu belichtenden Filmmaterials abhängig ist.

Eine Kopiervorrichtung nach dem Oberbegriff des Patentanspruches 1 ist grundsätzlich aus der US-A- 4,420,249 bekannt. Die Lichtquelle ist eine herkömmliche Lichtquelle, deren Licht über eine aufwendige Optik gesammelt und umgelenkt wird.

Aus der US-A-4,190,347 ist eine vollständig andere Vorrichtung bekannt, in der Glas- oder Kunststoffasern verwendet werden, die zuerst kreisförmig angeordnet sind und das Licht einer herkömmlichen Lichtquelle zu einem Strich ablenken. Das Licht wird lediglich in bestimmter Weise umgeleitet. Eine Lichtsammlung, beispielsweise von seitlich eintretendem Licht, ist nicht möglich. Farbstoffe, die zum Leuchten angeregt werden, sind in den Glas- oder Kunststofffasern nicht vorhanden.

Aus der EP-A-280 584 ist eine Vorrichtung bekannt, die mit fluoreszierenden Farbstoffen in besonderen optischen Fasern arbeitet. Die Fasern sind in einer speziellen Sehhilfe am Kopf einer Person angeordnet. Die spezielle Sehhilfe weist keine Gemeinsamkeiten mit einer Kopiervorrichtung zum Modifizieren von Filmvorlagen auf.

Der Erfindung liegt nun die Aufgabe zugrunde, eine Kopiervorrichtung der eingangs genannten Art zu schaffen, die eine äußerst scharfe Übertragung sicherstellt, und auch Unterstrahlungen vermeidet, sowie in einem breiten Bereich unabhängig von der Dicke des Vorlagen- bzw. Filmmateriales ist. Gleichzeitig sollen die Vorteile einer punktförmigen Lichtquelle gegeben und ein störungsfreies Arbeiten im Dunkelraum zulässig sein.

Diese Aufgabe wird durch das Kennzeichen des Anspruches 1 gelöst.

Erfingungsgemäß wird eine an sich bekannte Lichtsammelfolie ("LISA-Folie") eingesetzt. Diese Folie wird von dem Inhaber des Warenzeichens "LISA", der Firma BAYER AG, wie folgt beschrieben:

"LISA-Kunststoffe sind farbig transparente Polymere, deren besondere optische Eigenschaften es ermöglichen, aus der Umgebung Licht zu sammeln, im Innern des Kunststoffes zu leiten und einen großen Anteil des Lichtes konzentrisch an den Kanten abzustrahlen.

Daraus ergibt sich eine für die LISA-Kunststoffe typische Kantenhelligkeit. Die optischen Eigenschaften der LISA-Kunststoffe beruhen auf physikalischen Gesetzmäßigkeiten. Sie sind das Ergebnis des Zusammenwirkens von fluoreszierenden Farbstoffen, hoher Reinheit mit transparenten, optisch reinen Polymeren und der

2

geometrischen Gestalt der Kunststoffteile.

Es gibt Farbstoffe, die einen Teil des (weißen) Lichts aufnehmen und in nicht-sichtbare Wärmeenergie umwandeln. Andere Farbstoffe wandeln die aufgenommene Lichtenergie in sichtbares Licht um (Definition von Fluoreszenz)."

Einer solchen bekannten LISA-Folie bedient sich die Erfindung, um das Licht von der Linearlichtquelle, die vorzugsweise eine Streulichtquelle ist, zusammeln (zu diesem Zweck umgibt sie diese im wesentlichen wie ein Schirm), und zu der Blende zu führen. Die entsprechende Kante, die das Licht abgibt, wird hierbei parallel zu der Strichblende und angrenzend an diese angeordnet, um eine möglichst verlustfreie Übertragung des aus dieser Kante austretenden Lichts durch die Strichblende auf den zu belichtenden Film zu gewährleisten.

In vorteilhafter Weise handelt es sich bei der Strichblende um eine stabförmige Samnellinse, die die Funktion des bündelnden Spaltes übernimmt. Es ist aber auch möglich, eine herkömmliche Spaltblende einzusetzen.

Wenn eine Sammellinse verwendet wird, so kann diese in vorteilhafter Weise so eingesetzt werden, wie in den Ansprüchen 3 und 4 definiert.

Erfindungsgemäß kann ein sehr schmales Abbild projiziert (0,1 bis 0,3 mm) werden, wodurch der sog. "Schattenzieh-Effekt" vermieden wird. Das von der Lichtsammelfolie abgestrahlte Licht hat einen Punktlichtcharakter, so daß es auch bei mäßigem Filmkontakt keine Unterstrahlungen gibt. Sog. Rastervorlagen lassen sich problemlos verarbeiten, mindestens bis zu einem 60er Raster.

Der Lichteinfallwinkel ist unabhängig vom Filmformat. Wesentlich ist auch, daß der Wirkungsgrad sehr viel besser ist als bei bekannten Kopiervorrichtungen mit einer Streulichtfläche und zwar ca. um den Faktor 10. Schließlich ist die Filmdicke unkritisch.

Im folgenden wird die Erfindung unter Hinweis auf die Zeichnung anhand eines Ausführungsbeispieles näher erläutert.

Es zeigt:

Fig. 1 eine Seitenansicht einer Ausführungsform einer Kopiervorrichtung nach der Erfindung;

Fig. 2 eine um 90° gedrehte Ansicht der Ansicht nach Fig. 1 in Richtung der Bewegungsachse; und

Fig. 3 die Einzelnheit Z der Fig. 1 in vergrößertem Maßstab.

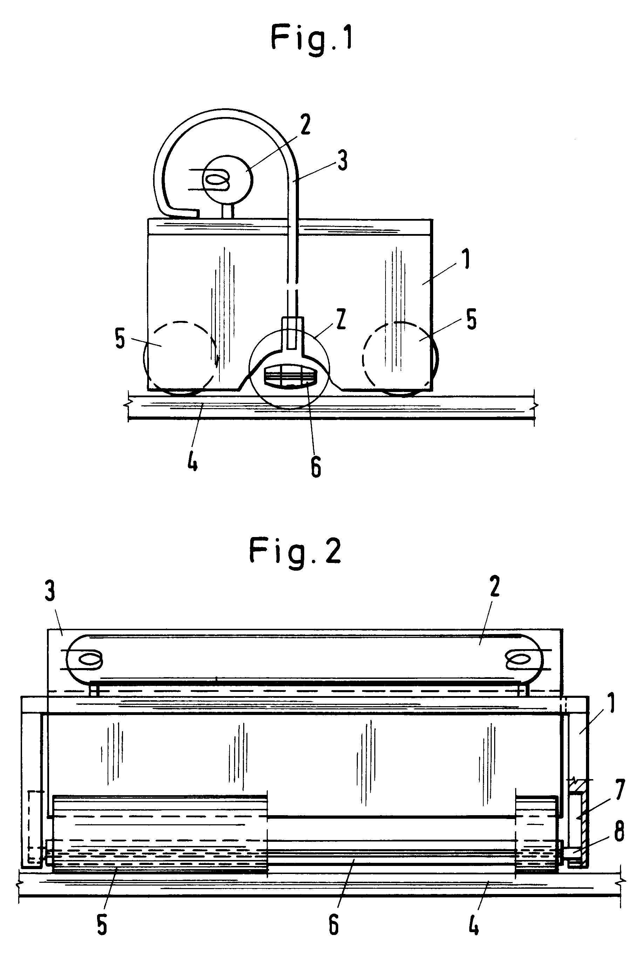

In der Zeichnung ist die Kopiervorrichtung schematisch mit ihren wesentlichen Bauteilen dargestellt. Sie besteht aus einem Gehäuse 1, auf dem die Linearlichtquelle in Form einer Streulichtquelle, in diesem Falle einer Kaltlicht-Neonröhre 2, angeordnet ist. Die Kaltlicht-Neonröhre 2 wird schirmartig von der Lichtsammelfolie 3 umschlossen, wobei sich die Lichtsammelfolie in das Gehäuse 1 erstreckt. Die eine untere Kante der Lichtsammelfolie 3, die in dem Gehäuse 1 liegt, weist einen Abstand zu einem ortsfesten Tisch 4 auf, der die Filmebene bildet. Diese Kante, die die für die Belichtung wesentliche, lichtabstrahlende Kante ist, verläuft parallel zu der Filmebene. Zwischen der Filmebene und dieser Kante ist die Strichblende angeordnet, die bei dieser Ausführungsform durch eine stabförmige Sammellinse 6 gebildet wird. Die Sammellinse verläuft in Längsrichtung parallel zu der lichtabstrahlenden Kante der Lichtsammelfolie 3. In Fig. 2 ist die Sammellinse 6 in Längsrichtung und in Fig. 1 praktisch im Querschnitt zu erkennen.

In dem Gehäuse sind zwei Andrückwalzen 5 gelagert, die auf der Filmvorlage 11 abrollen können.

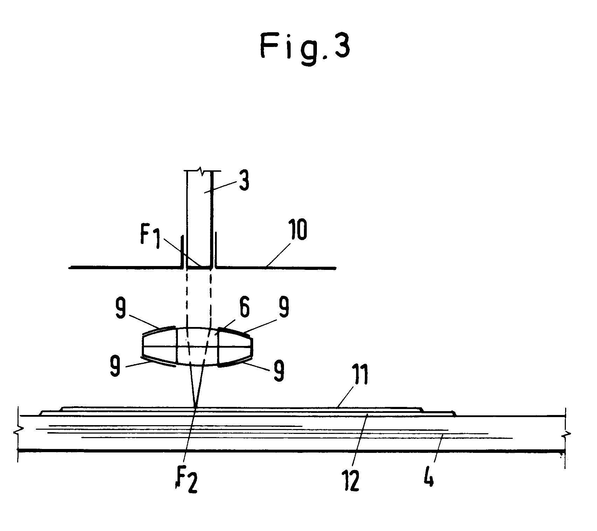

In Fig. 3 ist zu erkennen, daß auf dem die Filmebene bildenden Tisch der zu belichtende Film 12 und die Filmvorlage 11 angeordnet sind. In der Zeichnung ist nicht zu erkennen, wie die Relativbewegung zwischen Filmvorlage und Film durchgeführt wird. Diese Bewegung kann in unterschiedlichster Weise durchgeführt werden. Sie erfolgt unter Berücksichtigung der Darstellungen der Fig. 1 und 3 von links nach rechts oder umgekehrt. Unter Berücksichtigung der Darstellung nach Fig. 2 erfolgt diese Bewegung senkrecht zu der Darstellungsebene.

Die beiden Brennpunkte der Sammellinse 6 sind mit $F_1$ und $F_2$ bezeichnet. Bei der dargestellten Ausführungsform liegt die lichtabstrahlende Kante der Lichtsammelfolie 3 in dem Brennpunkt $F_1$ und der zu belichtende Film 12 in dem Brennpunkt $F_2$. Bedingt durch den hohen Wirkungsgrad, kann die Sammellinse 6 abgedunkelt sein, wie es bei 9 angedeutet ist. Hierdurch entsteht ein großer Schärfentiefebereich. Eine zusätzliche Abdeckung in dem Gehäuse 1 ist mit 10 bezeichnet.

Wenn ein Film 12 durch eine Filmvorlage 11 belichtet und eine gewünschte Modifikation durchgeführt werden soll, so werden die beiden Bewegungen in einer Achsrichtung durchgeführt. Die eine Bewegung ist die Relativbewegung zwischen dem Film 12 und der Filmvorlage 11, die das Maß der Modifikation bestimmt. Die andere Bewegung in gleicher Achsrichtung ist die Bewegung des Gehäuses 1 mit der Lichtquelle 2 der Lichtsammelfolie 3, der Sammellinse 4 und den Andrückwalzen 5, die hierbei auf der Filmvorlage abrollen.

In Fig. 2 ist noch erkennbar, daß die Sammellinse 6 durch eine Führung 7,8 in der Höhe verstellbar in dem Gehäuse 1 gelagert ist. Hierdurch ist der Abstand zu dem Film und zu der lichtabstrahlenden Kante der Lichtsammelfolie ein- bzw. verstellbar.

**Patentansprüche**

1. Vorrichtung zum Modifizieren d.h. Verzerren von Filmvorlagen (11), die auf einem zu belichtenden Film (12) angeordnet, relativ zu diesem entsprechend der gewünschten Dehnung oder Stauchung bewegt und durch eine Lichtquelle (2) belichtet werden, die in der durch die Relativbewegung zwischen Filmvorlage (11) und Film (12) festgelegten Achsrichtung über diese gefahren wird, wobei zwischen Filmvorlage (11) und Film (12) einerseits und der Lichtquelle (2) andererseits eine mit dieser mitbewegbare Strichblende (6) vorgesehen ist, dadurch gekennzeichnet, daß die Lichtquelle (2) von einer unter dem Warenzeichen "LISA" der Firma BAYER AG bekannten lichtsammelnden und das gesammelte Licht entlang ihrer Kanten abstrahlenden Folie (3), nach Art eines Schirms umschlossen ist, wobei eine Kante der Folie (3) parallel zu der Strichblende (6) verläuft und an diese angrenzt.

2. Kopiervorrichtung nach Anspruch 1, dadurch gekennzeichnet, daß die Strichblende durch eine stabförmige Sammellinse (6) gebildet ist, in deren Brennpunkt ($F_2$) der zu belichtende Film (12) liegt.

3. Kopiervorrichtung nach Anspruch 2, dadurch gekennzeichnet, daß die parallel zu der Strichblende liegende, lichtabgebende Folienkante der lichtsammelnden Folie (3) in dem anderen Brennpunkt ($F_1$) der Sammellinse (6) liegt.

4. Kopiervorrichtung nach Anspruch 2 oder 3, dadurch gekennzeichnet, daß die Sammellinse seitlich (bei 9) abgedunkelt ist.

5. Kopiervorrichtung nach Anspruch 1, dadurch gekennzeichnet, daß die Strichblende durch eine an sich bekannte Spaltblende gebildet ist.

6. Kopiervorrichtung nach einem oder mehreren der vorstehenden Ansprüche, dadurch gekennzeichnet, daß die Lichtquelle eine Streulichtquelle (2), z. B. eine Kaltlicht-Neonröhre ist.

**Claims**

1. Device for the modification, i.e. distortion, of film patterns (11) which are arranged on a film (12) to be exposed, are moved relative to the latter corresponding to the desired elongation or compression, and are exposed by means of a light source (2) which is moved over the film pattern (11) and the film (12) in the axial direction determined by the relative movement between the film pattern (11) and the film (12), wherein a line diaphragm (6) is provided between the film pattern (11) and the film (12) on the one hand and the light source (2) on the other hand, which line diaphragm (6) can be moved along with the latter, characterized in that the light source (2) is substantially enclosed in the manner of a screen by a light collecting and the collected light along its edges radiating foil (3), as under the trademark "LISA" of the firm BAYER AG, one edge of the foil extends parallel to the line diaphragm (6) and is adjacent to it.

2. Copying device according to claim 1, characterized in that the line diaphragm is formed by means of a rod-shaped collecting lens (6), the film (12) to be exposed lying in the focal point ($F_2$) of the latter.

3. Copying device according to claim 2, characterized in that the light-radiating foil edge of the light collecting foil (3) lying parallel to the line diaphragm lies in the other focal point ($F_1$) of the collecting lens (6).

4. Copying device according to claim 2 or 3, characterized in at the collecting lens is darkened at the side (at 9).

5. Copying device according to claim 1, characterized in that the line diaphragm is formed by means of a gap diaphragm which is known per se.

6. Copying device according to one or more of the above claims, characterized in that the light source is a scattered light source (2), e.g. a cold-light neon tube.

**Revendications**

1. Dispositif pour la modification, c'est-à-dire la distorsion d'originaux de film (11) qui sont placés sur un film (12) à exposer, qui sont déplacés par rapport à celui-ci selon l'extension ou la compression souhaitée et qui sont exposés par une source de lumière (2) qui est déplacée au-dessus de ceux-ci dans le sens de l'axe déterminé par le déplacement relatif entre l'original du film (11) et le film (12), un diaphragme à trait (6) qui se déplace avec la source de lumière (2) étant prévu entre l'original du film (11) et le film (12) d'une part et la source de lumière (2) d'autre part, caractérisé en ce que la source de lumière (2) est entourée par une feuille (3), qui recueille la lumière et qui rayonne la lumière recueillie le long de ses bords, qui est connue sous la marque "LISA" des établissements BAYER AG, un bord de la feuille (3) étant parallèle au diaphragme à trait (6) et adjacent à celui-ci.

2. Dispositif pour copier selon la revendication 1, caractérisé en ce que le diaphragme à trait est formé par une lentille de convergence (6) en forme de barre dans le foyer ($F_2$) de laquelle se trouve le film à exposer (12).

3. Dispositif pour copier selon la revendication 2, caractérisé en ce que le bord de la feuille qui recueille la lumière qui rayonne la lumière et qui est parallèle au diaphragme à trait se trouve dans l'autre foyer ($F_1$) de la lentille de convergence.

4. Dispositif pour copier selon la revendication 2 ou 3, caractérisé en ce que la lentille convergente est obscurcie latéralement (en 9).

5. Dispositif pour copier selon la revendication 1, caractérisé en ce que le diaphragme à trait est formé par un diaphragme à fente connu en soi.

6. Dispositif pour copier selon l'une ou plusieurs des revendications précédentes, caractérisé en ce que la source de lumière est une source de lumière dispersée (2), par exemple un tube néon à lumière froide.

# Fig.1

# Fig.2

# Fig.3